# EUROPÄISCHE PATENTSCHRIFT

(11) **EP 1 619 516 B1**
(45) Veröffentlichungstag und Bekanntmachung des Hinweises auf die Patenterteilung: **25.02.2009**
(21) Anmeldenummer: 05015395.6
(22) Anmeldetag: 15.07.2005
(51) Int. Cl.: G01S 1/00, G08B 21/02

(54) **Verfahren und Vorrichtung zum Orten eines Objekts**
Method and device for the localisation of an object
Procédé et dispositif pour localiser un objet

(30) Priorität: 21.07.2004 DE 102004035330
(43) Veröffentlichungstag der Anmeldung: 25.01.2006
(73) Patentinhaber: Jurleit, André, 97422 Schweinfurt (DE)
(72) Erfinder: Jurleit, André, 97422 Schweinfurt (DE)
(74) Vertreter: Gosdin, Michael

(56) Entgegenhaltungen:
- EP-A- 1 333 692
- US-A- 5 652 570

## Beschreibung

Die Erfindung betrifft ein Verfahren zum Orten eines Objekts.

Die Positionsfeststellung, d. h. Ortung eines Objekts nach dem GPS-Verfahren ist hinlänglicher Stand der Technik. Zur Positionsfeststellung kommen mehrere Satelliten zum Einsatz. Jeder Satellit sendet Informationen, die seine Identifikation und Position erhalten, sowie den Zeitpunkt, zu dem die Informationen versendet wurden. Diese übermittelten Bahndaten des Satelliten (Ephemeriden- und Almanachdaten) werden vom GPS-Empfänger gespeichert und für spätere Berechnungen verwendet. Um die Position zu bestimmen, vergleicht der GPS-Empfänger die Zeit, zu der das Signal ausgesandt wurde mit der Zeit, zu der das Signal empfangen wurde. Aus dieser Zeitdifferenz kann die Entfernung des Satelliten berechnet werden. Werden von weiteren Satelliten Messungen hinzugefügt, so kann die aktuelle Position trianguliert werden. Mit wenigstens drei Satelliten kann der GPS-Empfänger seine Position auf der Erdoberfläche bestimmen. Mittels vier oder mehr Satelliten erfolgt eine dreidimensionale Ortung, es wird also die absolute Position des Objekts im Raum bestimmt. Durch ständige Neuberechnung der aktuellen Position kann der GPS-Empfänger auch die Geschwindigkeit und Bewegungsrichtung (als "ground speed" und "ground track" bezeichnet) berechnen. Eine andere Möglichkeit der Geschwindigkeitsmessung ist das Ausnutzen des Dopplereffekts, der durch die Bewegung bei den übermittelten Signalen auftritt.

Handelsüblich verfügbar sind GPS-Empfänger, d. h. in sich geschlossene GPS-Einheiten, die als Ergebnis der Ortung die relevanten Daten (Längen- und Breitenkoordinaten, Höhe über NN, Geschwindigkeit, Bewegungsrichtung, etc.) ausgeben, beispielsweise und zumeist im ASCII-Format.

Beim ASCII-Format handelt es sich um einen von der ISO unter ISO-646 standardisierten Code zur Darstellung von Groß- und Kleinbuchstaben, Ziffern sowie Sonder- und Steuerzeichen. Jedes Zeichen besteht aus 7 Bit, wodurch insgesamt 128 verschiedene Zeichen darstellbar sind. Dazu gehören Groß- und Kleinbuchstaben, Ziffern und Sonderzeichen. In der erweiterten Version hat der ASCII-Zeichensatz 8 Bits, wodurch weitere 128 Zeichen dargestellt werden können. Dies können länderspezifische Zeichen sein oder Sonderzeichen und Symbole. Das achte Bit wird auch als Paritätsbit benutzt. Die deutsche Version enthält auch Zeichen für Umlaute (DIN 66 0023).

Bekannt ist es, diese Daten zur Ortung eines Objekts an ein Mobiltelefon zu übertragen bzw. den GPS-Empfänger in ein solches Telefon zu integrieren, und bei Bedarf die Daten mittels einer SMS (Short Message) an einen gewünschten Empfänger zu übermitteln.

Bekannt ist es beispielsweise aus der US 6,222,483 weiterhin, dass die Positionsdaten, die per GPS ermittelt wurden, an ein Mobiltelefon übertragen und vom Mobiltelefon über das Internet zu der ermittelten Position ergänzende Informationen angefordert werden. Es können z. B. zu den ermittelten GPS-Koordinaten die Stadt, die Straße und ggf. die Hausnummer usw. angefordert werden, um die Orientierung zu erleichtern bzw. eine Navigation zu ermöglichen.

Die EP 1 333 692 A2 beschreibt ein Kommunikationsgerät, wobei ein erstes Gerät dieser Art in einem Fahrzeug angeordnet ist; das Gerät weist ein Softwareelement auf, das eine paketorientierte Datenübertragung in Echtzeit mit wenigstens einem zweiten Kommunikationsgerät oder einer entsprechenden logischen Kommunikationseinheit ermöglicht. Das erste Kommunikationsgerät ist mit einer Ortungsvorrichtung verbindbar, die Ortungskoordinaten des Fahrzeugs erzeugt. Ferner weist das erste Kommunikationsgerät Mittel zur Aussendung der Ortskoordinaten auf. Vorgesehen ist dabei, dass ein Senden und/oder eine Ausgabe von einer Information und/oder ein Auslösen eines Ereignisses in Abhängigkeit der Ortungskoordinaten erfolgt.

Nachteilig ist es bei den Lösungen gemäß dem Stand der Technik, dass die Übermittlungskosten (per SMS-Mitteilungen) für die Positionsdaten an einen Empfänger relativ hoch sind. Das macht sich insbesondere dann bemerkbar, wenn eine häufige oder gar ständige Überwachung der Position des Objekts gewünscht wird, was in vielen Anwendungsfällen gegeben ist.

Soll die Datenübermittlung über SMS-Mitteilungen eines Mobiltelefons erfolgen, fallen bei kontinuierlicher Positionsbestimmung also hohe Telekommunikationskosten an.

Der Erfindung liegt daher die **Aufgabe** zugrunde, ein Verfahren zu schaffen, mit dem es möglich ist, eine ständige Positionsüberwachung eines Objekts vornehmen zu können, ohne signifikante Kommunikationskosten zu haben. Die Positionsdaten sollen auch in einer solchen Weise ablegbar sein, dass ihre spätere Auswertung möglich ist.

Die **Lösung** dieser Aufgabe durch die Erfindung ist verfahrensgemäß durch folgende Schritte gekennzeichnet:
a) Ermittlung der Positionsdaten des Objekts mittels eines satellitengestützten Ortungssystems;
b) Konvertierung der Positionsdaten in Daten, die über das Internet übertragbar sind;
c) Weiterleitung der konvertierten Positionsdaten an ein mobiles Gerät, das eine Kommunikationsverbindung zum Internet herstellen kann;
d) Übertragung der konvertierten Positionsdaten über eine Internetverbindung von dem Gerät zu einer, vorzugsweise ortsfesten, Rechenanlage, insbesondere zu einem Server;
e) Gegebenenfalls Rückkonvertierung der konvertierten Positionsdaten in im Klartext bzw. graphisch darstellbare Positionsdaten;
f) Darstellung der übertragenen Daten oder der rückkonvertierten Daten an der Rechenanlage oder an einer weiteren Rechenanlage, die die übertragenen Daten von der Rechenanlage abruft,
wobei die Übertragung über die Internetverbindung gemäß Schritt d) zu jedem Zeitpunkt erfolgt, an dem eine Änderung der Positionsdaten registriert wird.

Erfindungsgemäß werden also zur Übertragung der Informationen über die Position des Objekts nach entsprechender Aufbereitung der Daten diese über das Internet zu einem Server oder zu einer Rechenanlage übertragen. Dort sind die Daten abrufbar bzw. einzusehen, wodurch die Positionsüberwachung des Objekts ermöglicht wird. Es können günstige Tarife für die Datenübermittlung per Internet genutzt werden, was die Überwachung kostengünstig macht. Dies gilt vor allem, wenn Tarife gewählt werden, die nach Datenvolumen und nicht nach Anschaltzeit abrechnen. Durch Nutzung dieser Tarife wird es möglich, eine permanente Überwachung der Position des Objekts zu geringen Kosten vorzunehmen.

Die Kosten können also grundsätzlich durch die Nutzung einer Internetverbindung reduziert werden. Da die von üblichen GPS-Systemen zur Verfügung gestellten Daten jedoch meist relativ umfangreich sind, kommt ein Datenvolumen zustande, das entsprechende Übertragungskosten verursacht. Gemäß einer Weiterbildung der Erfindung ist daher vorgesehen, dass bei obigem Schritt a) eine erste Menge von Positionsdaten des Objekts ermittelt wird, aus denen dann eine zweite Menge Positionsdaten ausgewählt wird, die eine Teilmenge der ersten Menge darstellt, wobei die obigen Schritte b) bis f) mit der zweiten Menge der Positionsdaten durchgeführt werden.

Danach wird also der vom Ortungssystem zur Verfügung gestellte Datensatz auf eine Teilmenge reduziert, die dann nach Konvertierung über das mobile Gerät über das Internet an die Rechenanlage (Server) übertragen wird und dort eingesehen oder von dort von einer weiteren Rechenanlage abgerufen werden kann.

Dabei ergibt sich dabei der wesentliche Vorteil, dass die Telekommunikationskosten weiter reduziert werden können. Wieder gilt dies namentlich für solche Internetbenutzungstarife, die nicht nach Anschaltzeit, sondern nach übertragener Datenmenge abrechnen. Durch den fortbildungsgemäßen Vorschlag wird es möglich, eine ständige Verbindung zum Server aufrecht zu erhalten und alle benötigen Daten zu übertragen, deren Menge jedoch wesentlich reduziert ist. Zumeist ist es ausreichend, von den vom Ortungssystem zur Verfügung gestellten Daten lediglich die Längen- und Breitenkoordinaten zu übertragen, um eine effiziente Überwachung des Orts des Objekts vornehmen zu können; alle anderen Daten (Höhen, Geschwindigkeiten, Richtung, etc.) können u. U. ausgeblendet werden. Da dadurch das Datenvolumen gering bleibt, ergeben sich die geringen Kosten für die Überwachung des Objekts.

Bei oder nach obigem Schritt a) kann eine an sich bekannte Komprimierung der weiterzuverarbeitenden Daten erfolgen, was nochmals die Übertragungskosten reduziert.

Die Ortung gemäß obigem Schritt a) kann beispielsweise und bevorzugt durch ein GPS-Ortungssystem oder durch ein Galileo-Ortungssystem erfolgen.

Zumeist werden die Daten vom Ortungssystem im ASCII-Format bereitgestellt, so dass dann bei der Konvertierung nach obigem Schritt b) eine Umwandlung der ASCII-Daten in TCP-IP-Pakete erfolgen wird, d. h. die Konvertierung der Positionsdaten gemäß obigem Schritt b) erfolgt bevorzugt vom ASCII-Format in TCP-IP-Pakete.

Hierzu sei erläuternd angemerkt, dass es sich bei den TCP (Transmission Control Protocol) - IP (Internet Protocol) - Paketen um als solche bekannte Informationen nach dem Übertragungssteuerungs- und -Internet-Protokoll handelt (amerikanisches Kommunikationsprotokoll für die Datenübertragung in Netzwerken wie dem Internet).

IP ist dabei die Abkürzung für "Internet-Protokoll". Es ist zuständig für das korrekte Versenden von Daten von einem Punkt zu einem anderen. Die Endpunkte werden dabei durch IP-Adressen angegeben. Diese Adressen bestehen aus 4 Byte-Zahlen (z. B. 233.144.0.111).

Das Format des IP ist dabei standardisiert und weist eine Struktur auf, die unterschiedliche Informationen enthält (Angaben zur Version, Header-Länge, Service-Typ, Länge, ID, Flags, Fragment-Offset, TTL (Time-To-Live), höheres Protokoll, Checksum, Source-IP-Adresse, Ziel-IP-Adresse, ggf. Optionen). Jede Datei, die über das Internet verschickt wird, wird dabei in Pakete aufgeteilt. Diese Pakete können maximal 65536 Bytes groß sein. Jedes Paket bekommt dabei eine ID, wodurch beim Zielort die ursprüngliche Datei wieder zusammengesetzt werden kann.

Um ein Paket von einem Ort zum anderen zu senden, wird bei jedem Router die IP-Adresse betrachtet. Existiert in der Routing-Tabelle ein gleicher Eintrag, so wird das Paket direkt ans Ziel gesendet. Existiert kein solcher Eintrag, so wird das Paket zu dem Router gesendet, der eine ähnliche IP-Adresse besitzt, worauf dieser das Paket genau gleich bearbeitet. Ähnlich bedeutet hier, dass, wenn die IP-Adresse nicht im gleichen Netzwerk ist, das Paket zum nächst höheren Router gesendet wird, ansonsten zu einem tieferen Router, der jedoch die Ziel-IP-Adresse enthalten könnte.

Die Internetverbindung gemäß obigem Schritt d) ist vorzugsweise eine Verbindung nach dem UMTS-Standard, dem GPRS-Standard oder dem WiMax-Standard.

UMTS ist ein standardisiertes System für die universelle Mobilfunk-Telekommunikation. Vor allem im Bereich der Multimediatechnik eröffnet UMTS dank seiner sehr hohen Übertragungsraten leistungsfähige Multimediadienste. UMTS integriert die Leistungsmerkmale der Leistungsvermittlung der GSM-Technik (Groupe Spéciale Mobile/global system mobile) und der Paketvermittlung der GPRS-Technik (s. unten) und schafft dadurch gute Voraussetzungen für schnellen Datentransfer. Darüber hinaus enthält UMTS Spezifikationen, die den Transport von Daten auf der Grundlage des IP-Protokolls unterstützen und so die Verwendung von UMTS für einen funkgestützten Internet-Zugang ermöglichen. Der Dienst ist visuell orientiert, wobei die UMTS-Mobiltelefone Videotelefonie und Streaming von Audio und Videoclips unterstützen.

GPRS ist ein spezielles System für die Übertragung von Informationen über das GSM-Netzwerk. Hierbei werden die Daten in einzelne Pakete aufgeteilt, wobei jedes dieser Pakete mit zusätzlichen Informationen versehen wird. Diese übermitteln dem Netzwerk, wie die einzelnen Pakete zusammenhängen und wer die Nachricht empfangen soll. Ermöglicht wird dies durch die IP(Internet Protocol)-Technologie, die auch im Internet zum Einsatz kommt und eine Datenübertragung ohne eine direkte leitungsvermittelnde Verbindung zum Empfänger möglich macht. Mit Hilfe des GPRS-Systems können die Pakete durch verschiedene Kanäle des Netzwerks geleitet werden, was die Nutzung freier Kapazitäten ermöglicht. Die Pakete werden dann beim Empfänger in der richtigen Reihenfolge zu einem Ganzen zusammengefügt.

Die GSM-Funkkanäle sind in acht Zeitschlitze unterteilt, von denen jeder eine Datenübertragungsrate von 9,6 Kilobit pro Sekunde (kbit/s) hat. Bei einer normalen GSM-Datenübertragung belegt der Anwender während der kompletten Dauer seiner Verbindung einen Zeitschlitz und macht somit Gebrauch von den gesamten 9,6 kbit/s. Wenn alle GSM-Zeitschlitze belegt sind, können keine weiteren Personen auf die Netzwerk-Verbindungen zugreifen. Der Anwender muss unabhängig von der übertragenen Datenmenge bei einer normalen GSM-Datenübertragung für die gesamte Verbindungszeit, die für die Datenübertragung benötigt wird, bezahlen.

Bei der GPRS-Technologie stehen die Zeitschlitze mehreren Nutzern gleichzeitig zur Verfügung. Damit kann, durch das Versenden individuell adressierter Informationspakete, die Kapazität des Netzwerks gezielter genutzt werden, beispielsweise in Übertragungspausen, die bei der herkömmlichen GSM-Datenübertragung ungenutzt bleiben würden. Zudem bietet dieses System ein effektiveres Kostenmanagement, da die Abrechnung nach Datenmenge und nicht nach Verbindungsdauer erfolgt. WiMax (Worldwide Interoperability for Microwave Access) ist eine drahtlose Technologie für die Daten-Hochgeschwindigkeitsübertragung. WiMax ist eine Fortentwicklung der Funk-LANs und zeichnet sich durch eine Übertragungsgeschwindigkeit von bis zu 74 Mbit/s aus, bei einer Reichweite von bis zu 50 km.

Im Falle einer Rückkonvertierung der Positionsdaten gemäß obigem Schritt e) wird weiterbildungsgemäß so vorgegangen, dass diese von TCP-IP-Paketen ins ASCII-Format erfolgt. Mit Vorteil erfolgt die Übertragung über die Internetverbindung nach obigem Schritt d) zu jedem Zeitpunkt, an dem eine Änderung der Positionsdaten registriert wird. Darunter ist zu verstehen, dass dann, wenn sich die Positionsdaten des Objekts nicht ändern, auch keine Daten übermittelt werden, was Übertragungskosten spart, ohne auf Informationen verzichten zu müssen. Damit wird eine lückenlose Positionsverfolgung des Objekts möglich. Da die Daten in der vorzugsweise ortsfesten Rechenanlage gespeichert sind, kann eine spätere Auswertung erfolgen, welchen Weg das Objekt genommen hat.

Die Vorrichtung zum Orten des Objekts weist auf:
- ein satellitengestütztes Ortungsmittel, das zur Ermittlung von Positionsdaten geeignet ist;
- Mittel zur Konvertierung der Positionsdaten in Daten, die über das Internet übertragbar sind;
- Mittel zum Weiterleiten der konvertierten Positionsdaten an ein mobiles Gerät, das eine Kommunikationsverbindung zum Internet herstellen kann;
- Mittel zur Übertragung der konvertierten Positionsdaten über eine Internetverbindung von dem Gerät zu einer, vorzugsweise ortsfesten, Rechenanlage, insbesondere zu einem Server; und
- mindestens ein Mittel zum Darstellen der übertragenen und gegebenenfalls rückkonvertierten Daten, wobei diese Mittel die Rechenanlage oder eine weitere Rechenanlage bzw. ein Bestandteil dieser Rechenanlagen sind, wobei die weitere Rechenanlage die übertragenen Daten von der Rechenanlage abrufen kann.

Weiterbildungsgemäß kann die Vorrichtung weiterhin Mittel zum Auswählen einer zweiten Menge Positionsdaten aus einer ersten Menge Positionsdaten aufweisen, wobei die zweite Menge eine Teilmenge der ersten Menge ist.

Es sei angemerkt, dass das erfindungsgemäße Konzept bereits mit einer einzigen Rechenanlage realisierbar ist, die auch mobil sein kann, und die vom mobilen Gerät die Positionsdaten erhält. Bevorzugt wird als Rechenanlage, die die Positionsdaten empfängt, ein ortsfester Internet-Server zum Einsatz kommen. Möglich ist es ferner, dass eine weitere Rechenanlage, die ortsfest angeordnet oder mobil sein kann, auf den Server zugreift und von dort die Positionsdaten abruft. Möglich ist es ferner, dass statt einer einzelnen weiteren Rechenanlage auch ein Netzwerk mehrerer Rechner vorgesehen werden kann, die die Positionsdaten vom Server abrufen.

Das satellitengestützte Ortungsmittel, gegebenenfalls das Mittel zum Auswählen, das Mittel zur Konvertierung, das Mittel zur Weiterleitung und das mobile Gerät sind bevorzugt als eine Einheit ausgebildet. Dabei können die meisten oder alle genannten Elemente auf einer Platine untergebracht sein.

Dabei kommt bevorzugt ein Pocket-PC, ein Laptop oder ein Mobiltelefon zum Einsatz, die als die genannte Einheit ausgebildet sind.

Eine andere alternative Lösung besteht aus einer Armbanduhr, die die genannten Komponenten inkorporiert hat.

Der erfindungsgemäße Vorschlag führt in vorteilhafter Weise zu einer Lösung, mit der eine permanente Übertragungsmöglichkeit der zu überwachenden Positionsdaten geschaffen wird.

Insbesondere durch die vorgeschlagene Reduzierung der Menge der zu übertragenden Daten ergibt sich, dass bei Nutzung entsprechender Tarife für die Internetbenutzung eine sehr preiswerte Positionsüberwachung möglich wird.

Die übertragenen Daten können auf dem Server gespeichert werden, wodurch es zu jedem Zeitpunkt möglich ist, eine Auswertung vorzunehmen, um die vom zu überwachenden Objekt zurückgelegte Route zu rekonstruieren.

Das mobile Gerät bleibt weiterhin voll einsatzfähig, da das zur Übertragung beispielsweise genutzte GPRS keine Voice-Leitung belegt.

Weiterhin ist eine Authentifizierungsmöglichkeit für eine Berechtigungsabfrage leicht realisierbar, so dass nur befugte Personen die Überwachung und Verfolgung des Objekts vornehmen können. In diesem Zusammenhang sei angemerkt, dass an sich bekannte Verschlüsselungs- und Entschlüsselungstechniken an den verschiedenen Stellen der Umsetzung der Erfindung eingesetzt werden können. Damit können insbesondere datenschutzrechtliche Vorschriften eingehalten werden.

Das vorgeschlagene System ist einfach sowohl als Einplatz-Lösung als auch als Mehrplatzlösung auszugestalten.

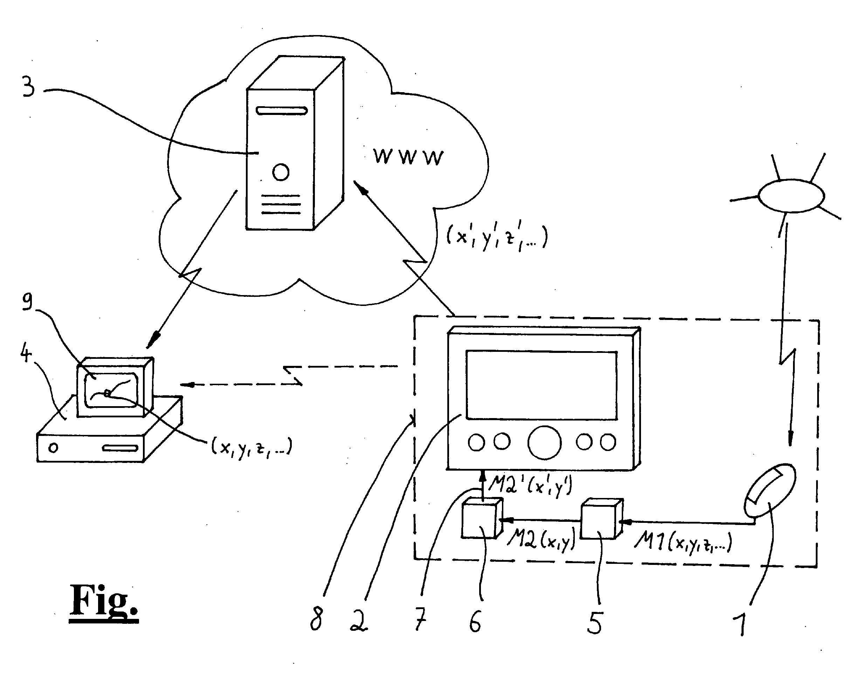

In der Zeichnung ist ein Ausführungsbeispiel der Erfindung dargestellt. Die einzige Figur zeigt schematisch ein mobiles Gerät, dessen Positionsdaten über eine ortsfeste Rechenanlage zu einer weiteren Rechenanlage übertragen werden.

In der Figur ist ein als Pocket-PC ausgebildetes mobiles Gerät 2 zu sehen, das mit einem Objekt 1 (satellitengestütztes Ortungsmittel) in Verbindung steht, dessen Position zu überwachen ist. Die Position soll - gegebenenfalls als Funktion der Zeit - an einer ortsfesten Rechenanlage 4 überwacht werden, und zwar so, dass zu jedem Zeitpunkt die Information über die Position vorliegt.

Das Objekt 1 ist ein GPS-Empfänger ("GPS-Mouse"), der mit einer Anzahl Satelliten in Verbindung steht und in bekannter Weise eine erste Menge M1 Positionsdaten x, y, z, ... ermittelt. Dies erfolgt nach einem standardisierten Schema, d. h. die Positionsdaten werden beispielsweise im ASCII-Format vom Objekt 1 zur Verfügung gestellt. Die Positionsdaten x, y, z, ... enthalten eine Vielzahl von Einzeldaten, beispielsweise den Längen- und Breitengrad, die Höhe über NN, die Geschwindigkeit, mit der sich das Objekt bewegt und die Richtung, in welcher sich das Objekt bewegt.

Für die Überwachung des Objekts 1 über die Rechenanlage 4 ist im Ausführungsbeispiel indes lediglich eine Teilmenge dieser Daten interessant, hier nämlich nur die Längen- und Breitenkoordinaten x und y.

Daher werden die vom Objekt 1 ermittelten Daten zunächst einem Mittel 5 zum Auswählen einer zweiten Menge M2 von Positionsdaten x, y zugeführt. Diese Mittel 5 treffen die gewünschte Auswahl, d. h. sie blenden alle Daten aus, die nicht an der Rechenanlage 4 dargestellt werden sollen. Die als Daten im ASCII-Format vorliegenden Informationen werden von den Mitteln 5 Mitteln 6 zur Konvertierung zugeleitet, wo die Daten in solche Informationen umgewandelt werden, die über das Internet übertragen werden können, nämlich in TCP-IP-Pakete. Die hieraus resultierenden Daten sind mit x' und y' bezeichnet. Über Mittel zur Weiterleitung 7 (ggf. eine Kabelverbindung) werden die konvertierten Daten an das mobile Gerät 2 übermittelt, das nun eine Internetverbindung herstellt und die Daten an einen Server 3 (ortsfeste Rechenanlage) überträgt.

Von dort können sie von der weiteren Rechenanlage 4 abgerufen und beispielsweise am Bildschirm graphisch dargestellt werden (Kurvenverlauf x, y). Gegebenenfalls werden die Daten vorher wieder in ASCII-Daten oder in andere Daten konvertiert, die die Rechenanlage 4 verarbeiten und darstellen kann.

Die GPS-Daten des GPS-Empfängers 1 werden also in den Internet-Standard "TCP-IP" konvertiert und durch den Verbindungsaufbau mittels UMTS, GPRS oder WiMAX über das Internet an räumlich entfernte Empfangsgeräte 3 übertragen.

Wie anhand gestrichelter Linien angedeutet ist, können das Objekt 1, das mobile Gerät 2, die Mittel 5 zum Auswählen der zweiten Menge M2, die Mittel 6 zur Konvertierung und die Mittel 7 zur Weiterleitung in einer Einheit 8 zusammengefasst sein.

Bei einer Einplatz-Lösung erfolgt die Übertragung an das Endgerät 4. Bei einer Mehrplatzlösung (nicht dargestellt) erfolgt die Übermittlung an einen zentralen Ablage-Server im Internet. Dadurch wird die Abfrage von GPS-Daten an mehreren Empfangsgeräten und die Auswertung abgespeicherter Daten ermöglicht.

Die Mittel 6 zum Konvertieren der GPS-Daten können ein Datenverarbeitungsprogramm sein, das auf dem als Handheld, Palm, PDA, Pocket-PC oder Notebook ausgebildeten mobilen Gerät 2 installiert ist. Diese Mittel können auch aus einem Chip bestehen, der die Konvertierung vornimmt.

Zur Auswertung der übermittelten Daten auf der Rechenanlage 4 kann eine auf einem Datenverarbeitungsprogramm basierende Emulation zum Einsatz kommen.

Es ist auch möglich, dass die ortsfeste (oder mobile) Rechenanlage 4 direkt die konvertierten Positionsdaten (alle GPS-Daten oder nur eine Teilmenge davon) vom mobilen Gerät 2 über das Internet erhält. Dies ist durch den gestrichelt in die Figur eingetragenen Blitz angedeutet.

Unter vielen anderen Anwendungen ist beispielsweise die Überwachung des Aufenthaltsortes von Personen mit dem Erfindungsvorschlag in besonders einfacher und kostengünstiger Weise möglich. Ist das mobile Gerät 2 samt Objekt 1 (GPS-Empfänger) in Form des satellitengestützten Ortungsmittels beispielsweise in einer Armbanduhr integriert, dann kann die Überwachung unauffällig vorgenommen werden, z. B. bei Kindern, deren Eltern deren Aufenthaltsort wissen möchten.

### Bezugszeichenliste:

- 1: Objekt (satellitengestütztes Ortungsmittel)
- 2: mobiles Gerät
- 3: ortsfeste Rechenanlage (Server)
- 4: weitere Rechenanlage
- 5: Mittel zum Auswählen der zweiten Menge M2
- 6: Mittel zur Konvertierung
- 7: Mittel zur Weiterleitung
- 8: Einheit
- 9: Mittel zum Darstellen der Daten

- x, y, z, ...: Positionsdaten
- x', y', z': konvertierte Positionsdaten (TCP-IP-Pakete)
- M1: erste Menge Positionsdaten
- M2: zweite Menge Positionsdaten (Teilmenge)

## Patentansprüche

1. Verfahren zum Orten eines Objekts (1), das die Schritte aufweist:
a) Ermittlung der Positionsdaten (x, y, z, ...) des Objekts (1) mittels eines satellitengestützten Ortungssystems;
b) Konvertierung der Positionsdaten (x, y, z, ...) in Daten (x', y', z', ...), die über das Internet übertragbar sind;
c) Weiterleitung der konvertierten Positionsdaten (x', y', z', ...) an ein mobiles Gerät (2), das eine Kommunikationsverbindung zum Internet herstellen kann;
d) Übertragung der konvertierten Positionsdaten (x', y', z', ...) über eine Internetverbindung von dem Gerät (2) zu einer, vorzugsweise ortsfesten, Rechenanlage (3, 4), insbesondere zu einem Server;
e) Gegebenenfalls Rückkonvertierung der konvertierten Positionsdaten (x', y', z', ...) in im Klartext bzw. graphisch darstellbare Positionsdaten (x, y, z, ...);
f) Darstellung der übertragenen Daten (x', y', z', ...) oder der rückkonvertierten Daten (x, y, z, ...) an der Rechenanlage (3, 4) oder an einer weiteren Rechenanlage (4), die die übertragenen Daten (x, x', y, y', z, z', ...) von der Rechenanlage (3) abruft,
wobei die Übertragung über die Internetverbindung gemäß Schritt d) zu jedem Zeitpunkt erfolgt, an dem eine Änderung der Positionsdaten (x', y', z', ...) registriert wird.

2. Verfahren nach Anspruch 1, **dadurch gekennzeichnet, dass** bei Schritt a) gemäß Anspruch 1 eine ersten Menge (M1) von Positionsdaten (x, y, z, ...) des Objekts (1) ermittelt wird, aus denen dann eine zweite Menge (M2) Positionsdaten (x, y) ausgewählt wird, die eine Teilmenge der ersten Menge (M1) darstellt, wobei die Schritte b) bis f) gemäß Anspruch 1 mit der zweiten Menge (M2) der Positionsdaten (x, y) durchgerührt werden.

3. Verfahren nach Anspruch 1 oder 2, **dadurch gekennzeichnet, dass** bei oder nach Schritt a) gemäß Anspruch 1 eine Komprimierung der weiterzuverarbeitenden Daten erfolgt.

4. Verfahren nach einem der Ansprüche 1 bis 3, **dadurch gekennzeichnet, dass** die Ortung gemäß Schritt a) nach Anspruch 1 durch ein GPS-Ortungssystem oder durch ein Galileo-Ortungssystem erfolgt.

5. Verfahren nach einem der Ansprüche 1 bis 4, **dadurch gekennzeichnet, dass** die Konvertierung der Positionsdaten gemäß Schritt b) nach Anspruch 1, insbesondere vom ASCII-Format, in TCP-IP-Pakete erfolgt.

6. Verfahren nach einem der Ansprüche 1 bis 5, **dadurch gekennzeichnet, dass** die Internetverbindung gemäß Schritt d) nach Anspruch 1 eine Verbindung nach dem UMTS-Standard, dem GPRS-Standard oder dem WiMax-Standard ist.

7. Verfahren nach einem der Ansprüche 1 bis 6, **dadurch gekennzeichnet, dass** die Rückkonvertierung der Positionsdaten gemäß Schritt e) nach Anspruch 1 von TCP-IP-Paketen ins ASCII-Format erfolgt.

## Claims

1. Method for the localization of an object (1), exhibiting the steps:
a) determining the position data (x, y, z, ...) of the object (1) by means of a satellite-based localizing system;
b) converting the position data (x, y, z, ...) into data (x', y', z', ...) which can be transmitted via the Internet;
c) forwarding the converted position data (x', y', z', ...) to a mobile device (2) which can establish a communication link to the Internet;
d) transmitting the converted position data (x', y', z', ...) via an Internet link from the device (2) to a preferably stationary computer system (3, 4), particularly to a server;
e) if necessary, converting the converted position data (x', y', z', ...) back into position data (x, y, z, ...) which can be represented in plain text or graphically;
f) representing the transmitted data (x', y', z', ...) or the back-converted data (x, y, z, ...) at the computer system (3, 4) or at a further computer system (4) which calls up the transmitted data (x, x', y, y', z, z',...) from the computer system (3), wherein the transmission via the Internet link according to step d) takes place at any time at which a change in the position data (x', y', z', ...) is registered.

2. Method according to Claim 1, **characterized in that** in step a) according to Claim 1, a first set (M1) of position data (x, y, z, ...) of the object (1) is determined from which a second set (M2) of position data (x, y) is then selected which represents a subset of the first set (M1), wherein steps b) to f) according to Claim 1 are carried out with the second set (M2) of the position data (x, y).

3. Method according to Claim 1 or 2, **characterized in that** in or after step a) according to Claim 1, a compression of the data to be processed further is effected.

4. Method according to one of Claims 1 to 3, **characterized in that** the localization according to step a) according to Claim 1 is effected by a GPS localization system or by a Galileo localization system.

5. Method according to one of Claims 1 to 4, **characterized in that** the conversion of the position data according to step b) according to Claim 1 is effected, in particular, from the ASCII format into TCP-IP packets.

6. Method according to one of Claims 1 to 5, **characterized in that** the Internet link according to step d) according to Claim 1 is a link according to the UMTS standard, the GPRS standard or the WiMax standard.

7. Method according to one of Claims 1 to 6, **characterized in that** the back conversion of the position data according to step e) according to Claim 1 is effected from TCP-IP packets into the ASCII format.

## Revendications

1. Procédé pour localiser un objet (1) comprenant les étapes suivantes :
a) Détermination des données de position (x, y, z, ...) de l'objet (1) au moyen d'un système de localisation assisté par satellite ;
b) Conversion des données de position (x, y, z, ...) en données (x', y', z', ...) qui peuvent être transmises par l'Internet ;
c) Transfert des données de position converties (x', y' , z', ...) vers un appareil mobile () qui peut établir une liaison de communication avec l'Internet ;
d) Transmission des données de position converties (x', y', z', ...) par le biais d'une liaison Internet depuis l'appareil (2) vers un équipement informatique (3, 4), de préférence fixe, notamment vers un serveur ;
e) Le cas échéant, reconversion des données de position converties (x', y', z', ...) en données de position (x, y, z, ...) pouvant être représentées en texte clair ou sous forme graphique ;
f) Représentation des données transmises (x', y', z', ...) ou des données reconverties (x, y, z, ...) sur l'équipement informatique (3, 4) ou sur un autre équipement informatique (4) qui invoque les données transmises (x, x', y, y', z, z', ...) auprès de l'équipement informatique (3),
la transmission par le biais de la liaison Internet selon l'étape d) s'effectuant à chaque moment auquel est enregistrée une modification des données de position (x', y', z', ...).

2. Procédé selon la revendication 1, **caractérisé en ce que** lors de l'étape a) selon la revendication 1, une première quantité (M1) de données de position (x, y, z, ...) de l'objet (1) est déterminée, à partir de laquelle une deuxième quantité (M2) de données de position (x, y) est ensuite choisie, laquelle représente une quantité partielle de la première quantité (M1), les étapes b) à f) selon la revendication 1 étant exécutées avec la deuxième quantité (M2) de données de position (x, y).

3. Procédé selon la revendication 1 ou 2, **caractérisé en ce qu'**une compression des données devant faire l'objet d'un traitement ultérieur est effectuée lors de l'étape a) ou après celle-ci selon la revendication 1.

4. Procédé selon l'une des revendications 1 à 3, **caractérisé en ce que** la localisation conformément à l'étape a) selon la revendication 1 est réalisée par un système de localisation par GPS ou par système de localisation par Galileo.

5. Procédé selon l'une des revendications 1 à 4, **caractérisé en ce que** la conversion des données de position conformément à l'étape b) selon la revendication 1 s'effectue notamment du format ASCII en paquets TCP/IP.

6. Procédé selon l'une des revendications 1 à 5, **caractérisé en ce que** la liaison Internet conformément à l'étape d) selon la revendication 1 est une liaison selon la norme UMTS, la norme GPRS ou la norme WiMax.

7. Procédé selon l'une des revendications 1 à 6, **caractérisé en ce que** la reconversion des données de position conformément à l'étape e) selon la revendication 1 s'effectue de paquets TCP/IP vers le format ASCII.
